# EUROPEAN PATENT APPLICATION

(11) **EP 4 787 982 A1**
(43) Date of publication of application: **05.08.2026**
(21) Application number: 23954408.3
(22) Date of filing: 29.09.2023
(51) Int. Cl.: H04W 56/00, H04W 36/08

(54) **TERMINAL, WIRELESS COMMUNICATION METHOD, AND BASE STATION**

(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); HARADA, Hiroki, Tokyo 100-6150 (JP); WANG, Jing, Beijing 100190 (CN)
(74) Representative: Hoffmann Eitle
(86) International application number: PCT/JP2023/035801
(87) International publication number: WO 2025/069442

(57) **Abstract**

A terminal according to one aspect of the present disclosure includes a receiving section that receives information indicating one or more candidate cells, information related to a timing advance acquisition method for the candidate cell, and cell switch command control information indicating a cell switch to a specific candidate cell, and a control section that judges, based on the information related to a timing advance acquisition method for the candidate cell, presence or absence of application of a timing advance procedure for the specific candidate cell after reception of the cell switch command control information.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a terminal (user terminal, User Equipment (UE)) uses, when moving between cells, L1L2-triggered mobility (LTM) defined by Rel. 18. Applying the LTM of Rel. 18 can shorten an interruption time of a cell switch.

It is assumed that in an LTM procedure of Rel. 18, RACH-based LTM using a random access procedure for a candidate cell/target cell and RACH-less LTM without using a random access procedure are supported after the UE receives control information indicating a cell switch. It is also assumed that as a TA acquisition method for a candidate cell, a method for performing TA acquisition on the UE side (for example, UE-based TA measurement) is supported in addition to a method using a random access procedure.

Studies have not sufficiently been made on how to control an LTM procedure (for example, RACH-based LTM/RACH-less LTM) when the method for performing TA acquisition on the UE side (for example, the UE-based TA measurement) is configured.

Thus, an object of the present disclosure is to provide a terminal, a radio communication method, and a base station that can appropriately perform a cell switch even when a method for performing TA acquisition on the UE side (for example, UE-based TA measurement) is supported.

### Solution to Problem

A terminal according to one aspect of the present disclosure includes a receiving section that receives information indicating one or more candidate cells, information related to a timing advance acquisition method for the candidate cell, and cell switch command control information indicating a cell switch to a specific candidate cell, and a control section that judges, based on the information related to a timing advance acquisition method for the candidate cell, presence or absence of application of a timing advance procedure for the specific candidate cell after reception of the cell switch command control information.

### Advantageous Effects of Invention

According to one aspect of the present disclosure, it is possible to appropriately perform a cell switch even when a method for performing TA acquisition on the UE side (for example, UE-based TA measurement) is supported.

### Brief Description of Drawings

[FIG. 1] FIG. 1A is a diagram to show an example of mobility for a UE in Rel. 17. FIG. 1B is a diagram to show an example of mobility for a UE in Rel. 18.
[FIG. 2] FIG. 2 is a diagram to show an example of LTM studied for Rel. 18.
[FIG. 3] FIG. 3 is a diagram to show processing between a UE and a base station (gNB) for LTM in Rel. 18.
[FIG. 4] FIG. 4 is a diagram to show processing of early DL synchronization between the UE and the base station (gNB) for LTM in Rel. 18.
[FIG. 5] FIG. 5 is a diagram to show processing of early UL synchronization between the UE and the base station (gNB) for LTM in Rel. 18.
[FIG. 6] FIG. 6 is a diagram to show an example of a timing advance group (TAG) to which a cell included in a cell group belongs.
[FIG. 7] FIG. 7 is a diagram to show an example of a MAC CE for timing advance command.
[FIG. 8] FIG. 8 is a diagram to show another example of the MAC CE for timing advance command.
[FIG. 9] FIG. 9 is a diagram to show an example of TAG configuration in a case where association of a TAG ID with a candidate cell is supported.
[FIG. 10] FIG. 10 is a diagram to show an example of an LTM procedure using UE-based TA measurement.
[FIG. 11] FIG. 11 is a diagram to show an example of an LTM procedure according to a first embodiment.
[FIG. 12] FIG. 12 is a diagram to show an example of a schematic structure of a radio communication system according to one embodiment.
[FIG. 13] FIG. 13 is a diagram to show an example of a structure of a base station according to one embodiment.
[FIG. 14] FIG. 14 is a diagram to show an example of a structure of a user terminal according to one embodiment.
[FIG. 15] FIG. 15 is a diagram to show an example of a hardware structure of the base station and the user terminal according to one embodiment.
[FIG. 16] FIG. 16 is a diagram to show an example of a vehicle according to one embodiment.

### Description of Embodiments

### (Inter-Cell Mobility)

It is studied that a UE performs UL transmission to one or a plurality of cells/TRPs. As a procedure in this case, scenario 1 or scenario 2 below is considered. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, and an additional cell may be interchangeably interpreted.

### <Scenario 1>

Scenario 1 corresponds to, for example, inter-cell mobility for multi-TRP, but may be a scenario not corresponding to inter-cell mobility for multi-TRP.
(1) The UE receives, from the serving cell, a configuration of an SSB for beam measurement of a TRP corresponding to a different PCI from the serving cell and a configuration necessary for using radio resources for data transmission and reception (including resources of the different PCI).
(2) The UE performs beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. The UE is configured with a higher layer parameter related to the PCI of the non-serving cell from the serving cell. Scenario 1 may be applied in Rel. 17, for example.

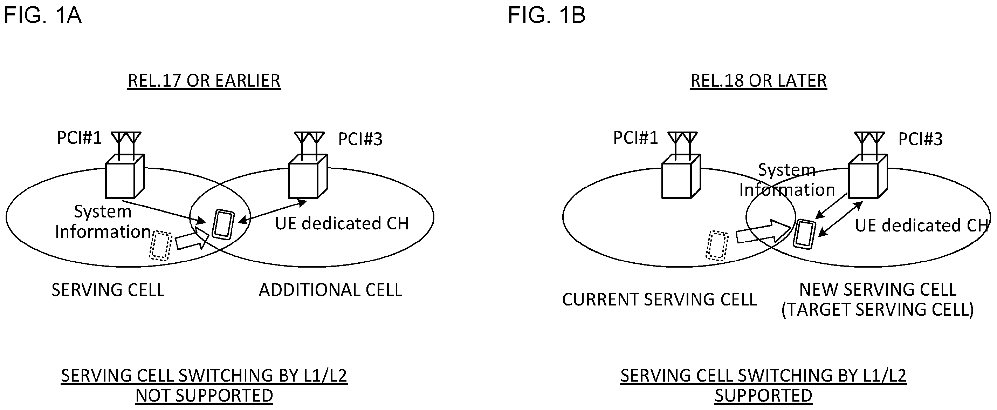

FIG. 1A is a diagram to show an example of movement of the UE in Rel. 17. A case is assumed in which the UE moves from a cell (serving cell) of PCI #1 to a cell (additional cell) (overlapping the serving cell) of PCI #3. In this case, in Rel. 17, switching of the serving cells by L1/L2 is not supported.

The additional cell is a cell including an additional PCI different from the PCI of the serving cell. The UE can receive/transmit a UE-dedicated channel (UE-dedicated CH) from the additional cell. On the other hand, the UE needs to be present within coverage of the serving cell in order to receive a UE common channel (for example, system information/paging/short message). When the UE moves out of coverage of the serving cell, switching of cells (for example, processing such as RRC reconfiguration) is required through handover (also referred to as L3 mobility) or the like.

### <Scenario 2>

In scenario 2, L1/L2 inter-cell mobility (for example, L1L2-triggered mobility (LTM)) is applied. In L1/L2 inter-cell mobility, the serving cell can be changed by using a function such as beam control without performing RRC reconfiguration. In other words, transmission and reception to and from a candidate cell/additional cell can be performed without performing handover. For handover, RRC reconnection is required, which generates a period in which data communication cannot be performed, and thus by applying L1/L2 inter-cell mobility that does not require handover, data communication can be continued even at the time of the serving cell change. Scenario 2 may be applied in Rel. 18, for example. In scenario 2, for example, the following procedure is performed.
(1) The UE receives, from the serving cell (Current serving cell), configuration information (for example, SSB configuration or the like) related to a cell (additional cell/candidate cell/target serving cell) having a different PCI for beam measurement/serving cell change.
(2) The UE performs beam measurement of the cell using the different PCI, and reports measurement results to the serving cell.
(3) The UE may receive a configuration (serving cell/candidate cell configuration) of the cell having the different PCI by higher layer signaling (for example, RRC). In other words, a pre-configuration related to serving cell change may be performed. The configuration may be performed together with or may be performed separately from the configuration in (1).
(4) Based on the above report, the TCI state of the cell having the different PCI may be activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18.

FIG. 1B is a diagram to show an example of movement of the UE in Rel. 18. In Rel. 18, the serving cell is switched by L1/L2 (for example, DCI/MAC CE). Here, shown is a case where PCI #1 corresponding to a current serving cell is switched to PCI #3 corresponding to a candidate cell (for example, Target serving cell) by L1/L2 signaling.

The UE can receive/transmit a common channel (for example, system information/paging/short message)/UE-dedicated channel from/to a new serving cell (target serving cell #3). With this, the UE may go out of the coverage of serving cell PCI #1 before the switching.

### (L1L2-Triggered Mobility (LTM) in Rel. 18)

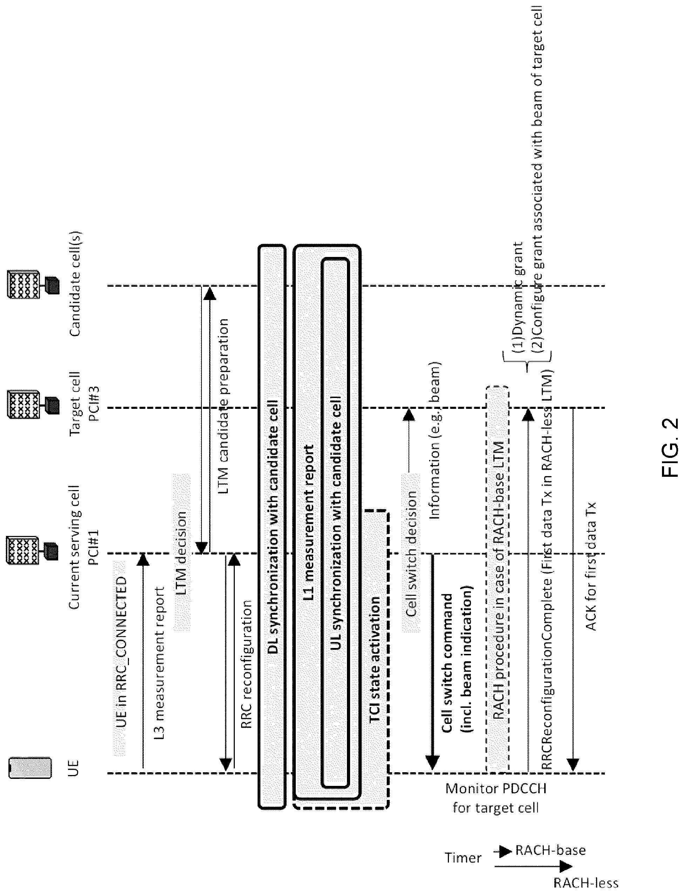

FIG. 2 is a diagram to show an outline of LTM studied for Rel. 18. The UE performs RRC connection to the current serving cell (base station with PCI #1), and transmits an L3 measurement report. The serving cell determines performance of LTM, based on the L3 measurement report, and performs preparation for the LTM with one or more candidate cells. The UE and the serving cell perform RRC reconfiguration. Note that the one or more candidate cells may include a target cell (base station with PCI #3).

The UE, the serving cell, the target cell, and the candidate cell perform DL synchronization. The UE performs L1 (for example, L1-RSRP/SINR) measurement for the serving cell/candidate cell/target cell and reports the measurement. The UE, the serving cell, the target cell, and the candidate cell perform UL synchronization.

The serving cell determines, based on the L1 measurement report, performance of a switch of the serving cell to the target cell (PCI #3), and transmits a cell switch command to the UE. After receiving the cell switch command, the UE starts PDCCH monitoring for the target cell.

In a case of RACH-based LTM, the UE performs a RACH procedure for the target cell. In a case of RACH-less LTM, the UE transmits an RRC reconfiguration complete message and transmits the first data to the target cell. The transmission of the first data is performed based on a dynamic grant or a configured grant associated with a beam of the target cell. The target cell transmits, to the UE, an ACK for the transmission.

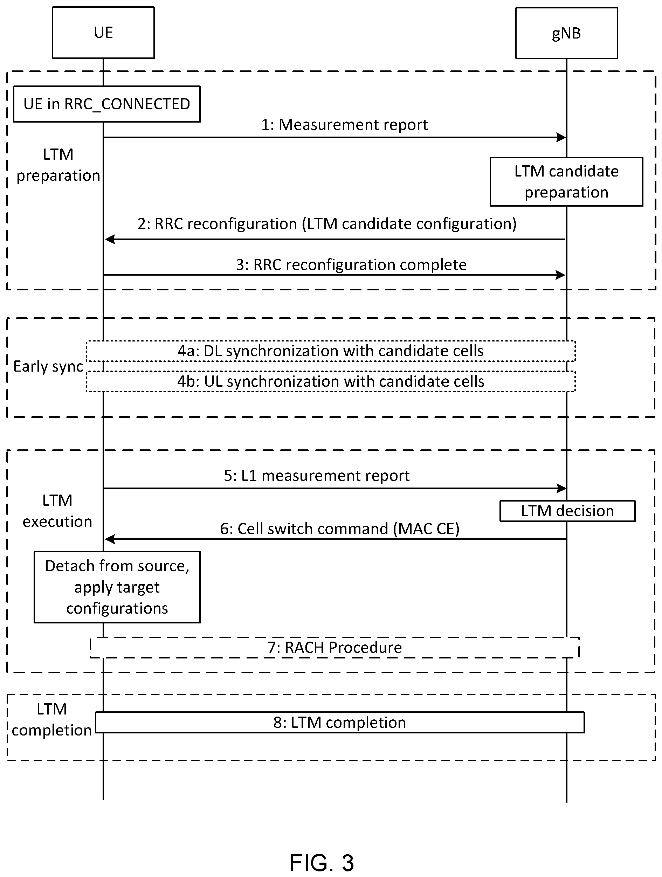

FIG. 3 is a diagram to show processing between the UE and the base station (gNB) for LTM in Rel. 18. Processings of respective steps of FIG. 3 will be described in detail below.
1: The UE transmits a measurement report message to the gNB. The gNB determines LTM configuration, and starts to prepare one or more candidate cells.
2: The gNB transmits, to the UE, an RRC reconfiguration message including an LTM candidate cell configuration for one or a plurality of candidate cells.
3: The UE stores the LTM candidate cell configuration, and transmits, to the gNB, an RRC reconfiguration complete message.
4a: Before receiving a cell switch command, the UE performs DL synchronization with one or more candidate cells. The DL synchronization for the candidate cell(s) before the cell switch command may be supported to be performed based on at least an SSB.
4b: The UE performs, when being requested by a network, early TA acquisition with the one or more candidate cells before the reception of the cell switch command. This is triggered via CFRA by a PDCCH order from a source cell. Next, the UE transmits a preamble to an indicated candidate cell. To minimize data interruption in the source cell with Contention Free Random Access (CFRA) to the candidate cell, the UE does not receive an RAR for acquisition of a TA value. The TA value for the candidate cell is indicated in the cell switch command. The UE does not maintain a TA timer for the candidate cell, and ensures validity of a TA, based on implementation of the network.
5: The UE performs L1 measurement configured for the candidate cell, and transmits an L1 measurement report to the gNB. The L1 measurement is performed as long as the RRC reconfiguration of step 2 is applied.
6: The gNB determines performance of a cell switch to the target cell, and transmits a MAC CE (cell switch command) for triggering the cell switch. The MAC CE includes a candidate index configuration for the target cell. The UE switches to the target cell, and applies a configuration indicated by the candidate configuration index.
7: The UE performs a random access procedure for the target cell when not having a valid TA for the target cell.
8: The UE completes an LTM cell switch procedure by transmitting an RRC reconfiguration complete message. When the UE performs the RA procedure in step 7, and the random access procedure is successfully completed, the UE considers that performance of the LTM is successfully completed. In the RACH-less LTM, when judging that the network has succeeded in receiving the first UL data, the UE considers that performance of the LTM is successfully completed. The UE judges the success in receiving the first UL data by receiving a PDCCH for indicating a C-RNTI of the UE in the target cell in which subsequent new transmission following the first UL data is scheduled.

Note that the RRC reconfiguration complete message may always be transmitted in performance of each LTM. Steps 4 to 8 may be performed a plurality of times for subsequent LTM by using the candidate cell configuration provided in step 2.

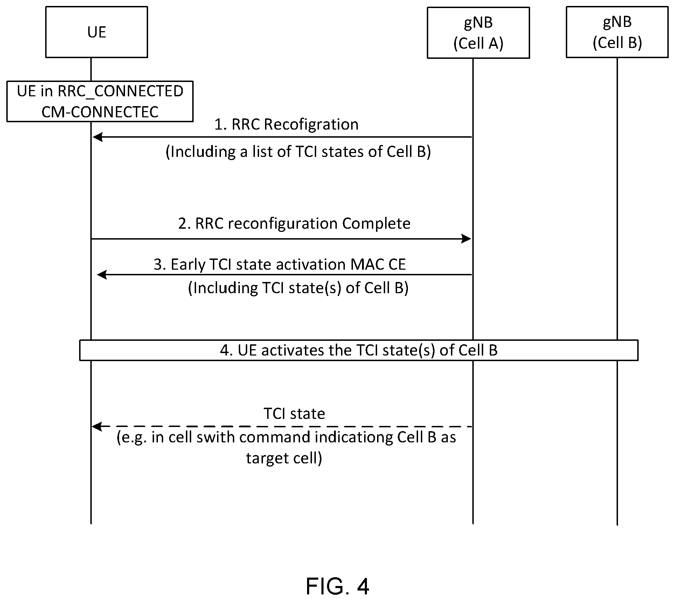

FIG. 4 is a diagram to show processing of early DL synchronization between the UE and the base station (gNB) for LTM in Rel. 18. Configuration by the network enables an RRC connection (RRC_CONNECTED) with the UE for enabling DL synchronization with a cell different from the current serving cell. This is enabled by pre-activation of a TCI state belonging to a cell requiring early DL synchronization. Processings of respective steps of FIG. 4 will be described in detail below. FIG. 4 shows an early TCI state activation (early DL synchronization) procedure triggered by the network.
1: A gNB to which cell A belongs provides, in an RRC reconfiguration message, the UE with a list of TCI states of cell B. The gNB to which cell A belongs provides a list of TCI states for one or more cells. The early TCI state activation procedure is performed by the UE for the one or more cells.
2: The UE responds to the gNB by using an RRC reconfiguration complete message.
3: To start the early TCI state activation procedure for cell B, the gNB to which cell A belongs transmits an early TCI state activation MAC CE. The early TCI state activation MAC CE may also indicate a TCI state for another cell during the TCI state activation procedure.
4: The UE activates a TCI state for cell B indicated by the early TCI state activation MAC CE.

The UE assumes early DL synchronization with a gNB to which cell B belongs. The gNB to which cell A belongs may start a procedure for a cell switch to cell B by providing a cell switch command indicating, to cell B, that cell B is a target cell.

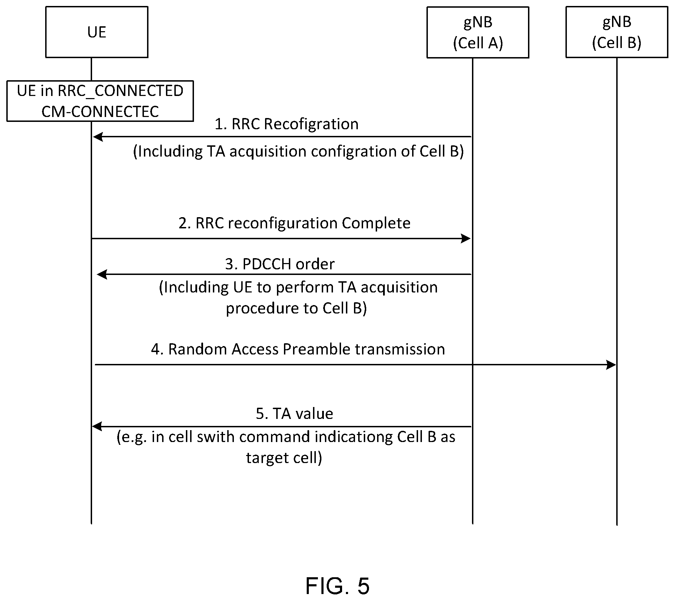

FIG. 5 is a diagram to show processing of early UL synchronization between the UE and the base station (gNB) for LTM in Rel. 18. Configuration by the network enables an RRC connection (RRC_CONNECTED) with the UE for enabling UL synchronization with a cell different from the current serving cell. Processings of respective steps of FIG. 5 will be described in detail below. FIG. 5 shows an early TA acquisition (early UL synchronization) procedure triggered by the network.
1: The gNB to which cell A belongs provides, in an RRC reconfiguration message, the UE with a TA acquisition configuration. The TA acquisition configuration includes RRC configuration information required for transmission of a random access preamble for cell B. The gNB to which cell B belongs calculates a TA value to be used by the UE. For example, an LTM cell switch procedure is performed for cell B. The TA acquisition configuration can include information related to one or a plurality of cells for which a TA acquisition procedure performed by the UE is performed.
2: The UE responds to the gNB by using an RRC reconfiguration complete message.
3: To start the TA acquisition procedure for cell B, the gNB to which cell A belongs transmits a PDCCH order message. The PDCCH order includes information required for transmission of a random access preamble for cell B.
4: In order for the gNB to which cell B belongs to compute a TA value to be used by the UE, the UE transmits the random access preamble for cell B (for example, when the LTM cell switch procedure is triggered for cell B). When the TA acquisition fails, the gNB to which cell A belongs can indicate retransmission of the preamble for the TA acquisition.
5: When the LTM cell switch procedure is triggered for cell B, the gNB to which cell A belongs provides, for the UE, a TA value computed by the gNB to which cell B belongs during the TA acquisition procedure, via an LTM cell switch command MAC CE for starting a procedure for a cell switch to cell B.

### (Timing Advance Group)

When a plurality of TRPs are used, there are some cases where the distance between a UE and each TRP is different. The plurality of TRPs may be included in the same cell (for example, a serving cell). Alternatively, among the plurality of TRPs, a given TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG (for example, serving cells configured with UL). A timing advance group including an SpCell of a MAC entity may be referred to as a primary timing advance group (PTAG), and a TAG other than the PTAG may be referred to as a secondary timing advance group (STAG). The maximum number of TAGs may be X (for example, X = 4) for each cell group (MCG/SCG).

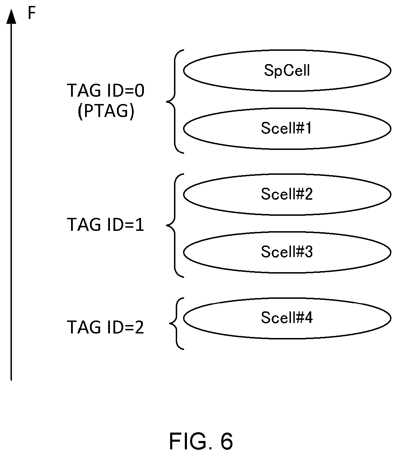

In existing systems (for example, Rel-16 NR), configuration of four TAGs at maximum is supported for each cell group (for example, MCG/SCG) (see FIG. 6). FIG. 6 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command (TAC) is signaled from a radio base station to the UE on a MAC layer. The UE controls a given timer (for example, a TA timer), based on reception of the TA command.

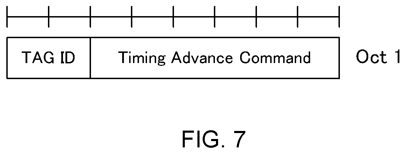

A MAC CE for timing advance command may have a structure including a field for timing advance group index (for example, TAG ID) and a field for timing advance command (see FIG. 7). The MAC CE may be formed by 1 octet (= 8 bits).

The field for TAG ID (TAG ID field) may be formed, for example, by 2 bits. The TAG ID field may be used to indicate the TAG ID of an addressed TAG. The field for timing advance command (TAC field) may be formed, for example, by 6 bits. The TAC field may indicate an index value T_{A} (0, 1, 2, ..., 63) to be used for control of the amount/value (relative amount/value) of timing adjustment to be applied by the MAC entity. The MAC CE for timing advance command shown in FIG. 7 may be referred to as a TAC MAC CE.

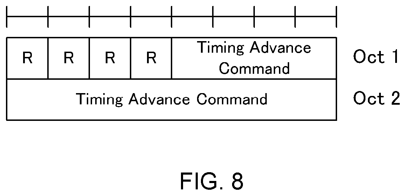

FIG. 8 is a diagram to show another example of the MAC CE for timing advance command. The MAC CE shown in FIG. 8 may be referred to as an absolute TAC MAC CE. The MAC CE may be formed by 2 octets (= 16 bits). Specifically, the MAC CE may include a field for reserve bit (R bit field) and a field for timing advance command (TAC field). The R bit field (R = 0) may be formed, for example, by 4 bits. The TAC field may be formed over 2 octets, for example, by 12 octets. The TAC field of FIG. 8 may indicate an index value to be used for control of the amount/value (absolute amount/value) of actual TA to be applied by the MAC entity, in a manner similar to that of FIG. 7. The absolute TAC MAC CE may not include the TAG ID field shown in FIG. 7.

The MAC CE shown in FIG. 7 may be used after initial access is established. On the other hand, the MAC CE shown in FIG. 8 may be used only in initial access, and may be included in an RAR or the like. The fields included in the MAC CE for timing advance command described above may be referred to as TA-related fields. Among them, the TAC field shown in FIG. 7 may be referred to as a TA adjustment field/field for indicating TA adjustment/field related to TA adjustment, and the TAC field shown in FIG. 8 may be referred to as an absolute TAC field/field for indicating an absolute TAC.

### (UL Transmission Control Based on Timing Advance)

It is also assumed that, in future radio communication systems, UL transmission is controlled based on timing advance for a serving cell (or a TRP of the serving cell) and a non-serving cell/additional cell (or a TRP of the non-serving cell/additional cell) in inter-cell mobility. Alternatively, a case is assumed that, in future radio communication systems, a different TAG (or TAG-ID) is configured for each of one or more TRPs (for example, a plurality of TRPs having different PCIs) corresponding to a given cell (or CC). Alternatively, a case is assumed that different TRPs corresponding to a given cell share a common TAG.

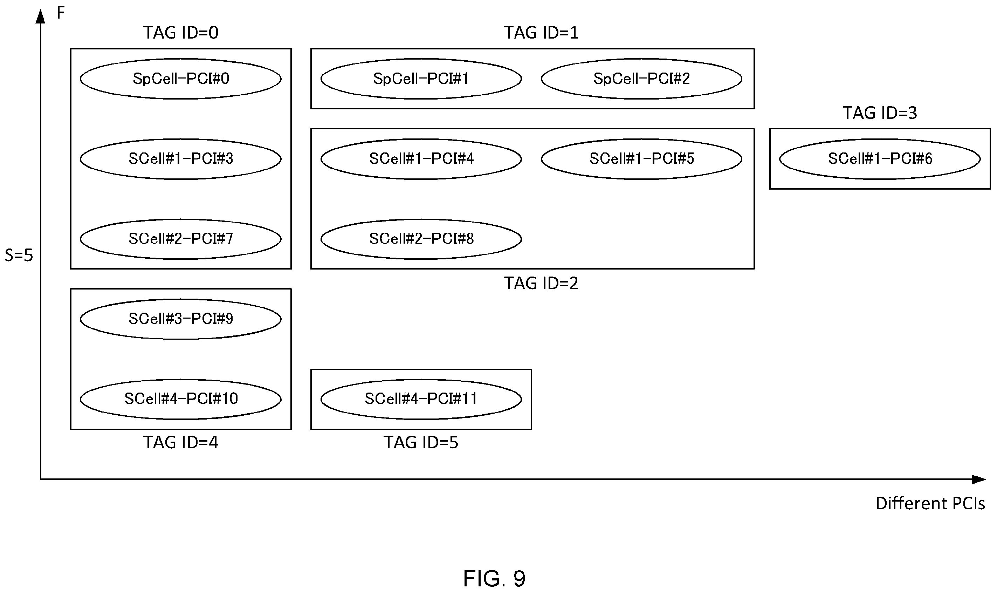

FIG. 9 is a diagram to show an example of configuration of TAGs each being for a plurality of cells (or TRPs) having different PCIs.

It is also assumed that M PCIs (for example, a serving cell + candidate cells associated with the serving cell) is configurable at maximum per CC and that configuration of N TAG(s) (for example, N ≤ M) at maximum is supported for the maximum M PCIs. In this case, one or a plurality of PCIs may be associated with one TAG.

For up to S serving cell(s) (or for S serving cell(s) at maximum) in a cell group, one or a plurality of PCIs may be associated with one TAG. In this case, T TAG(s) at maximum may be configured in consideration of one PCI per CC (case 1). In other words, up to (T × N) TAG(s) at maximum may be configured for the max (M × S) cells. Alternatively, up to U TAG(s) at maximum may be configured for the max (M × S) cells (case 2).

In a case where candidate cells are configured/applied/supported in this manner, it is assumed that different serving cells/different candidate cells are associated with the same TAG. The TAG for the candidate cells may be indicated by the base station, or may be judged based on a TA for the candidate cells acquired by the UE.

### (Maintenance of Uplink Time Alignment)

To maintain UL time alignment (Maintenance of Uplink Time Alignment), a parameter, such as a time alignment timer (for example, timeAlignmentTimer), may be configured. The time alignment timer (per TAG) may control time in which the MAC entity assumes that a serving cell belonging to an associated TAG is UL time aligned.

A parameter corresponding to each TAG ID may be configured by a higher layer parameter. For example, a parameter such as a time alignment timer (for example, timeAlignmentTimer) corresponding to each TAG ID may be configured. Alternatively, a TAG ID may be configured for each serving cell by a higher layer parameter (for example, tag-ID included in ServingCellConfig). Note that the TAG ID/parameter may be updated by a MAC CE after being configured by the higher layer parameter.

The time alignment timer may be maintained for UL time alignment. In Rel. 17, the time alignment timer may be configured/associated for each TAG. When the UE receives a MAC CE for timing advance command (for example, a TAC MAC CE), the UE starts or restarts a time alignment timer associated with each indicated timing advance group (for example, TAG).

When a MAC entity receives the MAC CE for timing advance command, and a given value (N_{TA}) is maintained for the indicated TAG, the MAC entity applies the timing advance command for the indicated TAG and starts or restarts the time alignment timer associated with the indicated TAG. The given value (N_{TA}) may be timing advance between DL and UL.

In a case where a timing advance command is received in an RAR message for a serving cell belonging to a TAG (for example, a TAG for an SpCell) or in message B (for example, MSGB) for an SpCell, when not selecting a random access preamble from contention-based random access preambles, the MAC entity may apply the timing advance command for the TAG and may start or restart a time alignment timer associated with the TAG.

When an absolute timing advance command (for example, an Absolute Timing Advance Command) is received in response to transmission of message A (for example, MSGA) including a given RNTI MAC CE (for example, a C-RNTI MAC CE), a timing advance command for a PTAG may be applied.

Operations when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, Rel. 17 supports given operation for PTAG being employed when a timing advance timer corresponding to a PTAG expires and given operation for STAG being employed when a timing advance timer corresponding to an STAG expires.

For example, when such a time alignment timer expires, the following operation (for example, the given operation for PTAG/given operation for STAG) may be performed.

### {Given Operation for PTAG}

In a case where the time alignment timer is associated with a PTAG,
- flush all the HARQ buffers of all serving cells
- notify RRC of release of a PUCCH, if configured, for all the serving cells
- notify RRC of release of an SRS, if configured
- clear all configured DL assignments and configured UL assignments
- clear a PUSCH resource for semi-persistent CSI reporting
- cause all running time alignment timers to expire
- maintain N_{TA} of all TAGs

### {Given Operation for STAG}

In a case where the time alignment timer is associated with an STAG, for all serving cells belonging to the TAG,
- flush all HARQ buffers
- notify RRC of release of a PUCCH, if configured
- notify RRC of release of an SRS, if configured
- clear all configured DL assignments and UL assignments
- clear a PUSCH resource for semi-persistent CSI reporting
- maintain N_{TA} of the TAG

### (TA Acquisition)

It is also considered that the UE performs, for UL transmission for candidate cells, UL transmission in consideration of a TA corresponding to the candidate cells. When the TA for the candidate cells is considered, the UE is required to perform TA acquisition for the candidate cells (for example, TA acquisition of candidate cells).

As the TA acquisition for the candidate cells, a plurality of TA acquisition methods, such as TA acquisition using a RACH (for example, RACH-based solutions) and TA acquisition without using a RACH (RACH-less solutions), are considered. For the TA acquisition using a RACH, a method with RAR monitoring and a method without RAR monitoring may be supported. The TA acquisition methods may be interpreted as TA acquisition schemes, TA acquisition types, or TA acquisition procedures. In the present disclosure, TA acquisition, TA measurement, TA calculation, TA computation, and TA determination may be interchangeably interpreted.

For example, the UE may acquire a TA for a candidate cell by transmitting, to the candidate cell, a RACH indicated/triggered by a PDCCH (for example, a PDCCH ordererd RACH). Information (for example, a TA value) related to the TA for the candidate cell may be included in a response signal (for example, RAR) of the RACH. The RAR may be transmitted from a serving cell or a candidate cell. Alternatively, a TA for a candidate cell may be acquired by using a RACH triggered by the UE or a RACH triggered from a network via a higher layer. The PDCCH order may be triggered by only a source cell (or serving cell).

Alternatively, the UE may acquire a TA for a candidate cell by transmitting, to the candidate cell, a signal other than a RACH. Information (for example, a TA value) related to the TA for the candidate cell may be indicated from the base station to the UE. As the signal other than the RACH, an SRS may be applied (SRS based TA measurement), for example.

Alternatively, the UE may measure/calculate/acquire a TA for a candidate cell, based on a DL signal (for example, a downlink reference signal) transmitted from each cell (for example, candidate cell/serving cell). The method in which the UE acquires a TA for a candidate cell, based on a DL signal transmitted from one or more cells may be referred to as UE-based TA measurement.

In the UE-based TA measurement, the downlink reference signal may be a given DL signal (for example, a synchronization signal block (for example, SSB)/CSI-RS or the like). For example, the UE may measure a difference between timings of DL signal receptions from a plurality of cells (or two cells) to obtain a TA for a candidate cell.

The plurality of cells may include a cell (for example, a serving cell) to be a reference. In this case, the UE may calculate a TA necessary for the candidate cell, based on a reception timing in a reference cell (and a TA value for the reference cell) and a timing difference (for example, T) between the reference cell and the candidate cell. The UE may acquire a TA for the candidate cell by using a timing advance command (TAC) transmitted from a serving cell.

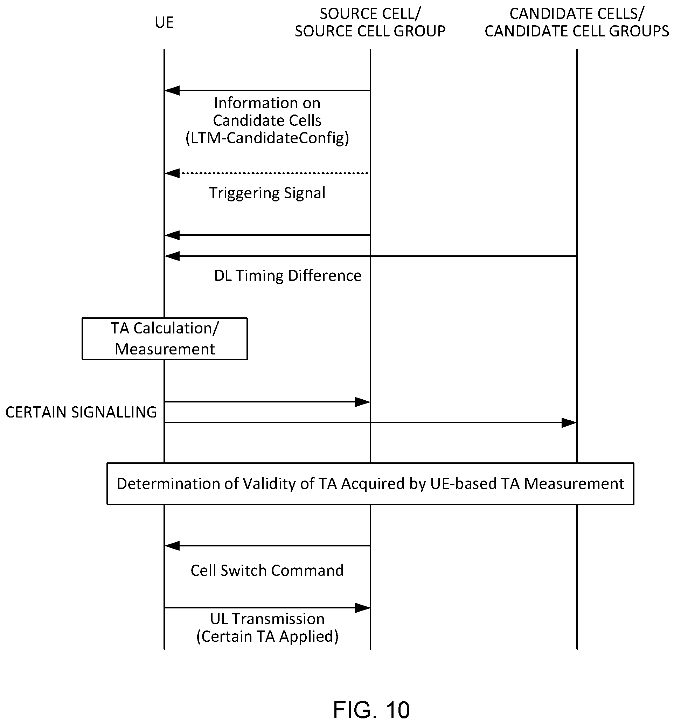

FIG. 10 is a diagram to show an example of cell switching operation in a case where the UE-based TA measurement is configured/supported. Note that the operation shown in FIG. 10 is merely an example, and the present embodiment is not limited to this.

The source cell may transmit, to the UE, information related to configuration of a candidate cell (for example, candidate cell configuration information). The information related to configuration of a candidate cell may be configured by a given higher layer parameter (for example, LTM-CandidateConfig). The information related to configuration of a candidate cell may include information related to TA acquisition applied to each candidate cell. For example, information related to a candidate cell configured with the UE-based TA measurement may be included.

The source cell may transmit, to the UE, information/signaling for triggering/indicating the UE-based TA measurement. Triggering of the UE-based TA measurement may be performed by a MAC CE/DCI.

When receiving the information/signaling for triggering/indicating the UE-based TA measurement, the UE may measure a difference between timings of DL signal receptions from a plurality of cells (or two cells) to obtain a TA for a candidate cell. For example, the UE may measure/calculate a difference between timings of DL signal receptions from a reference cell and a candidate cell. Information related to the reference cell/candidate cell may be indicated to the UE. As an example, the reference cell may be the source cell (or the serving cell).

When the reference cell (for example, source cell/serving cell/specific candidate cell) and the candidate cell are non-synchronized, the UE may apply a given offset parameter to TA acquisition between the reference cell and the candidate cell. The given offset parameter may be configured to the UE by higher layer configuration (for example, RRC configuration).

Note that the source cell may not transmit, to the UE, the information/signaling for triggering/indicating the UE-based TA measurement. In this case, the UE may autonomously perform the UE-based TA measurement, based on a higher layer parameter that indicates configuration of the UE-based TA measurement.

When acquiring a TA, based on the UE-based TA measurement, the UE may transmit given signaling (or information) to the source cell (or reference cell)/target cell (or candidate cell).

The given signaling (or information) may be applied to determination/notification of reliability (or validity/appropriateness) of the TA acquired by the UE-based TA measurement. For example, when validity of the TA acquired by the UE-based TA measurement is judged based on another condition/rule, the given signaling (or information) may notify reliability of the TA (or whether the TA is valid).

The UE/network (or base station) may determine/notify, based on the given signaling, the reliability (or validity/appropriateness) of the TA acquired by the UE-based TA measurement. The given signaling (or information) may be transmitted by using a MAC CE/UCI/PUCCH/PUSCH.

Note that the given signaling (or information) may not be transmitted.

Next, the source cell may transmit a cell switch command to the UE. TA information (for example, information related to the validity/appropriateness of the TA acquired by the UE-based TA measurement) may be transferred/notified from the source cell to the target cell. The UE may control, based on the TA acquired by the UE-based TA measurement and judged to be valid/appropriate, UL transmission after cell switching.

### (Analysis)

It is assumed that in LTM supported by Rel. 18, RACH-based LTM with a random access procedure and RACH-less LTM without a random access procedure are supported after the UE receives a MAC CE indicating a cell switch (for example, LTM Cell Switch Command MAC CE).

For example, based on a value of a given field (for example, a timing advance command (TAC) field) included in the cell switch command MAC CE indicating a cell switch, the presence or absence of application of a random access procedure may be indicated.

For example, when the value of the TAC field of the cell switch command MAC CE is not set to a specific value (for example, FFF), the UE may skip a RACH procedure (for example, PRACH transmission) for a target cell (perform a RACH-less LTM cell switch) after receiving the cell switch command MAC CE. In this case, the UE may judge a timing advance for the target cell, based on the value of the TAC field. Note that the specific value (for example, FFF) may mean that 12 bits of the TAC field are all 1 (or that a TA for the target cell is not included).

On the other hand, when the value of the TAC field of the cell switch command MAC CE is the specific value, the UE may perform control so as to perform a RACH procedure (for example, PRACH transmission) for a target cell indicated by the cell switch command MAC CE. In other words, based on a value of a field included in the cell switch command MAC CE, triggering of a random access procedure for an LTM cell switch is indicated.

As described above, as a TA acquisition method for a candidate cell, UE-based TA measurement without using a random access (RACH) procedure is supported. When the UE-based TA measurement is applied, the network (for example, the base station) provides/configures, for/to the UE, an RRC parameter (for example, ueMeasuredTA) for configuring the UE-based TA measurement.

When being provided with a higher layer parameter (for example, ueMeasuredTA) for configuring the UE-based TA measurement, the UE performs control so as to apply the UE-based TA measurement to acquire a TA for the candidate cell.

However, a case is also considered where, when the UE-based TA measurement is applied (for example, ueMeasuredTA is provided for the UE), only the UE has (or recognizes) a TA for the candidate cell at a timing when the UE receives a cell switch command MAC CE. In such a case, in terms of shortening of an interruption time, it is preferable that RACH-less LTM be triggered.

However, the base station fails to recognize that the UE has a TA for the candidate cell, and thus it is also considered that the cell switch command MAC CE triggers RACH-based LTM. Accordingly, the cell switch command MAC CE triggers RACH-based LTM (RACH-less LTM is not triggered) even when the UE has a TA for the candidate cell, and a useless procedure (for example, a RACH procedure) is performed, which may cause a delay.

Thus, the inventors of the present invention studied an LTM procedure in a case where RACH-less LTM is configured in LTM supporting RACH-base and RACH-less, and came up with the idea of one aspect of the present embodiment.

### (Various Interpretations and so on)

Embodiments according to the present disclosure will be described in detail with reference to the drawings as follows. The radio communication methods according to the embodiments may each be employed individually, or may be employed in combination.

In the present disclosure, "A/B" and "at least one of A or B" may be interchangeably interpreted. In the present disclosure, "A/B/C" may mean "at least one of A, B, or C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a base station, a gNB, and a network (NW) may be interchangeably interpreted.

In the present disclosure, a cell group, a serving cell group, a master cell group (MCG), and a secondary cell group (SCG) may be interchangeably interpreted. L1/L2, L1/L2 signaling, and DCI/MAC CE may be interchangeably interpreted. A serving cell may be replaced with a cell for transmitting a PDSCH. A candidate cell may mean a candidate cell to be a serving cell in response to L1/L2 inter-cell mobility. L1L2-triggered mobility (LTM) and L1/L2 inter-cell mobility may be interchangeably interpreted.

In the present disclosure, a cell, a PCI, a serving cell, a source serving cell, a source cell, a CC, a BWP, a BWP in a CC, and a band may be interchangeably interpreted. In the present disclosure, a cell, a PCI, a cell with an additional PCI, an additional cell, another cell, a non-serving cell, a cell having a different PCI, a candidate cell, a candidate serving cell, a cell having a PCI different from a PCI of a current serving cell, another serving cell, and a target cell may be interchangeably interpreted. The target cell may be a cell selected from a plurality of candidate cells. In the present disclosure, switching, change, and update may be interchangeably interpreted. A serving cell may be interpreted as a serving cell before switching or a serving cell after switching.

In the present disclosure, a potential cell switch command and a request/indication of a potential cell switch command may be interchangeably interpreted. A cell switch command in the present disclosure may be transmitted from a NW to a UE via L1/L2 (DCI/MAC CE).

### (Radio Communication Method)

### <First Embodiment>

A first embodiment relates to an example of an LTM procedure in a case where an RRC parameter (for example, ueMeasuredTA) for configuring UE-based TA measurement is provided for a UE.

The UE may judge, based on a given condition/given value, the presence or absence of application of a random access procedure (for example, which of RACH-less LTM or RACH-based LTM is to be applied) for a target cell after reception of control information (for example, a cell switch command MAC CE) indicating a cell switch.

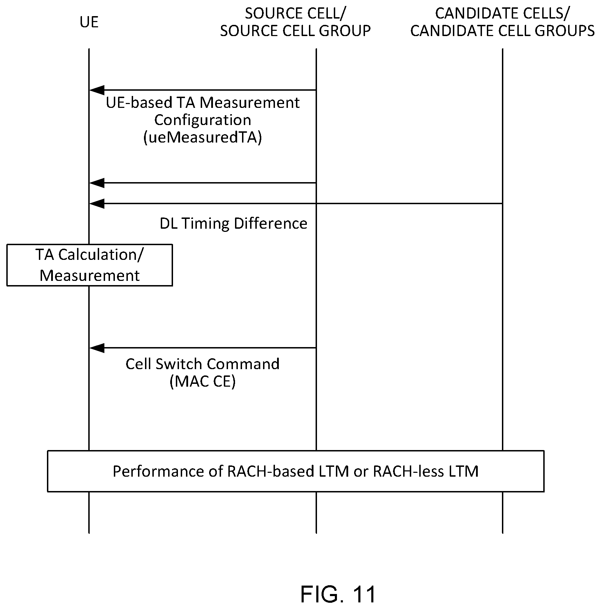

FIG. 11 is a diagram to show an example of the LTM procedure in the first embodiment. The applicable LTM procedure is not limited to FIG. 11, and some steps of FIG. 11 may be omitted, the order of the steps of FIG. 11 may be changed, or another step (for example, DL/UL early synchronization, L1 measurement report, or the like) may be added.

The UE may receive information related to one or more candidate cells and information related to a TA acquisition method for candidate cell(s) (for example, an RRC parameter). The TA acquisition method may be configured separately for each candidate cell or may be configured in common for a plurality of candidate cells (for example, a candidate cell group). Here, shown is a case where UE-based TA measurement (ueMeasuredTA) is configured as the TA acquisition method.

When the UE-based TA measurement is configured for a given candidate cell, the UE may perform control so as to acquire, for the candidate cell, a TA by the UE-based TA measurement. FIG. 11 shows a case where the TA is acquired by the UE-based TA measurement before reception of the cell switch command MAC CE, but a timing of the TA acquisition is not limited to this.

When receiving the cell switch command MAC CE, the UE performs control so as to perform mobility/cell switch for a candidate cell (or target cell) indicated by the cell switch command MAC CE. In this case, the presence or absence of application of a random access procedure for the target cell after the reception of the cell switch command MAC CE may be judged based on a given condition/given value.

The given condition/given value may be at least one of a value of a given field (for example, a timing advance command field) included in the cell switch command MAC CE, the presence or absence of configuration of a given RRC parameter (for example, ueMeasuredTA/earlyULsync) for the UE, a timing when the UE triggers/starts UE-based TA measurement, or the presence or absence of performance/end of TA acquisition with UE-based TA measurement performed by the UE.

When an RRC parameter (for example, ueMeasuredTA) for configuring UE-based TA measurement is provided for the UE, at least one of options 1-1 to 1-5 below may be applied.

### {Option 1-1}

Based on the RRC parameter (for example, ueMeasuredTA) used to configure UE-based TA measurement, the UE may judge the presence or absence of application of a random access procedure (or which of RACH-less LTM or RACH-based LTM is to be applied) after reception of the cell switch command MAC CE.

For example, when being provided with ueMeasuredTA, the UE may judge that RACH-less LTM is always triggered. In this case, after receiving the cell switch command MAC CE, the UE may perform a cell switch to a new target cell (for example, UL transmission to the new target cell or the like) without performing a random access procedure.

With this, in a case where TA acquisition is performed by UE-based TA measurement, RACH-less LTM can be triggered even when a network (for example, a base station) does not recognize a TA acquired by the UE.

### {Option 1-2}

Based on the RRC parameter (for example, ueMeasuredTA) used to configure UE-based TA measurement, and a value of the timing advance command field (for example, a Timing Advance Command value) included in the cell switch command MAC CE, the UE may judge the presence or absence of application of a random access procedure (or which of RACH-less LTM or RACH-based LTM is to be applied) after reception of the cell switch command MAC CE.

For example, when ueMeasuredTA is provided, and the value of the timing advance command field included in the cell switch command MAC CE is not set to a specific value (for example, FFF), the UE may judge that RACH-less LTM is triggered.

Option 1-2 may presuppose that the network (for example, the base station) recognizes that the UE performs UE-based TA measurement for the target cell (in other words, the UE has a TA for the target cell). The network may recognize that the UE has a TA for the target cell, based on a report from the UE, the report including a TA value/index of the candidate cell.

With this, in a case where TA acquisition is performed by UE-based TA measurement, RACH-less LTM can be triggered by a cell switch command MAC CE.

### {Option 1-3}

Based on the RRC parameter (for example, ueMeasuredTA) used to configure UE-based TA measurement, and an explicit indication included in the cell switch command MAC CE, the UE may judge the presence or absence of application of a random access procedure (or which of RACH-less LTM or RACH-based LTM is to be applied) after reception of the cell switch command MAC CE.

The explicit indication may be indicated, for example, by a value of a given field (for example, a reserve field (or R bit)) included in the cell switch command MAC CE. For example, RACH-based LTM may be indicated/triggered when the reserve field (or R bit) is "0," and RACH-less LTM may be indicated/triggered when the reserve field (or R bit) is "1."

For example, when ueMeasuredTA is provided, and the value of the given field of the cell switch command MAC CE is a specific value (for example, the reserve field (or R bit) is "1"), the UE may judge that RACH-less LTM is triggered.

Option 1-3 may presuppose that the network (for example, the base station) recognizes that the UE performs UE-based TA measurement for the target cell (in other words, the UE has a TA for the target cell). The network may recognize that the UE has a TA for the target cell, based on a report from the UE, the report including an index of the candidate cell.

With this, in a case where TA acquisition is performed by UE-based TA measurement, RACH-less LTM can be triggered by a cell switch command MAC CE.

### {Option 1-4}

Based on the RRC parameter (for example, ueMeasuredTA) used to configure UE-based TA measurement, and whether the UE has a TA for the target cell, the UE may judge the presence or absence of application of a random access procedure (or which of RACH-less LTM or RACH-based LTM is to be applied) after reception of the cell switch command MAC CE.

For example, when ueMeasuredTA is provided, and the UE has a TA for the target cell, the UE may judge that RACH-less LTM is triggered. When ueMeasuredTA is provided, and the UE has a TA for the target cell, even if a value of the timing advance command field included in the cell switch command MAC CE is set to a specific value (for example, FFF), the UE may judge that RACH-less LTM is triggered.

With this, in a case where TA acquisition is performed by UE-based TA measurement, RACH-less LTM can be triggered even when a network (for example, a base station) does not recognize a TA acquired by the UE. Even when ueMeasuredTA is provided, RACH-based LTM can be applied in a case where the UE does not acquire a TA in receiving a cell switch command MAC CE.

### {Option 1-5}

When the RRC parameter (for example, ueMeasuredTA) used to configure UE-based TA measurement is provided, and a value of the timing advance command field included in the cell switch command MAC CE is set to a specific value (for example, FFF), the presence or absence of application of a random access procedure (or which of RACH-less LTM or RACH-based LTM is to be applied) after reception of the cell switch command MAC CE may depend on the UE (or may be determined by the UE, based on a given condition).

For example, when ueMeasuredTA is provided, and the value of the timing advance command field included in the cell switch command MAC CE is set to a specific value (for example, FFF), RACH-less LTM may be performed in a case where the UE acquires a TA for the target cell, otherwise RACH-based LTM may be performed.

When ueMeasuredTA is provided, and the value of the timing advance command field included in the cell switch command MAC CE is set to a specific value (for example, FFF), the UE may perform RACH-less LTM in a case where a MAC CE for TCI state activation for the corresponding target cell has been transmitted before the cell switch command MAC CE, otherwise the UE may perform RACH-based LTM.

In option 1-1 to option 1-5, the RRC parameter (for example, ueMeasuredTA) used to configure UE-based TA measurement may be provided per cell/per UE/per frequency/per CC. The UE may judge, based on a unit in which ueMeasuredTA is provided (for example, per cell/per UE/per frequency/per CC), which of RACH-less LTM or RACH-based LTM is to be applied.

### {Variations}

In at least one of option 1-1 to option 1-5, a case is also considered where when RACH-less LTM is triggered, the UE has already acquired a TA by UE-based TA measurement before reception of the cell switch command MAC CE, and the cell switch command MAC CE (for example, a TAC field) indicates a TA. In this case, the UE may control UL transmission, based on at least one of the TA acquired by the UE-based TA measurement or the TA indicated by the cell switch command MAC CE (for example, the TAC field).

For example, the UE may control transmission timing of the first UL transmission after reception of the cell switch command MAC CE by using the TA acquired by the UE-based TA measurement. In this case, the TA indicated by the cell switch command MAC CE may not be applied (or may be ignored).

Alternatively, the UE may control transmission timing of the first UL transmission after reception of the cell switch command MAC CE by using the TA indicated by the cell switch command MAC CE. In this case, the TA acquired by the UE-based TA measurement may not be applied (or may be ignored).

### <Second Embodiment>

A second embodiment relates to an example of UE operation in a case where RACH-based LTM/RACH-less LTM is triggered. The second embodiment may be applied in combination with the first embodiment (at least one of option 1-1 to option 1-5).

### {Triggered RACH-based LTM}

When RACH-based LTM is triggered (or when a UE judges that RACH-based LTM has been triggered), at least one of UE operation 2-1 to UE operation 2-4 below may be applied.

### <<UE Operation 2-1>>

The UE may transmit a PRACH to a target cell. The UE can judge the target cell for which a random access procedure is performed based on a cell switch command MAC CE.

As a synchronization signal block (SSB) used for PRACH transmission to the target cell, an SSB associated with a TCI state ID for the target cell indicated by the cell switch command MAC CE may be used.

### <<UE Operation 2-2>>

The UE may stop communication with a serving cell (previous serving cell). For example, when the RACH-based LTM is triggered, the UE may perform control so as to transmit a PRACH to a target cell as a cell switch target (UE operation 2-1) and to stop communication with a serving cell as a cell switch source.

### <<UE Operation 2-3>>

The UE may release an RRC configuration for a serving cell (previous serving cell). For example, when the RACH-based LTM is triggered, the UE may perform control so as to transmit a PRACH to a target cell as a cell switch target (UE operation 2-1) and to release an RRC configuration for a serving cell as a cell switch source.

### <<UE Operation 2-4>>

The UE may store an RRC configuration for a serving cell (previous serving cell). For example, when the RACH-based LTM is triggered, the UE may perform control so as to transmit a PRACH to a target cell as a cell switch target (UE operation 2-1) and to store an RRC configuration for a serving cell as a cell switch source. With this, operation for RRC configuration can be omitted when communication with a serving cell is performed again.

### {Triggered RACH-less LTM}

When RACH-less LTM is triggered (or when the UE judges that RACH-less LTM has been triggered), at least one of UE operation 3-1 to UE operation 3-6 below may be applied.

### <<UE Operation 3-1>>

The UE may monitor a PDCCH for a target cell. The UE can judge the target cell for which PDCCH monitoring is performed based on a cell switch command MAC CE.

### <<UE Operation 3-2>>

The UE may stop communication with a serving cell (previous serving cell). For example, when the RACH-less LTM is triggered, the UE may perform control so as to start PDCCH monitoring for a target cell as a cell switch target (UE operation 3-1) and to stop communication with a serving cell as a cell switch source.

### <<UE Operation 3-3>>

The UE may release an RRC configuration for a serving cell (previous serving cell). For example, when the RACH-less LTM is triggered, the UE may perform control so as to start PDCCH monitoring for a target cell as a cell switch target (UE operation 3-1) and to release an RRC configuration for a serving cell as a cell switch source.

### <<UE Operation 3-4>>

The UE may store an RRC configuration for a serving cell (previous serving cell). For example, when the RACH-less LTM is triggered, the UE may perform control so as to start PDCCH monitoring for a target cell as a cell switch target (UE operation 3-1) and to store an RRC configuration for a serving cell as a cell switch source. With this, operation for RRC configuration can be omitted when communication with a serving cell is performed again.

### <<UE Operation 3-5>>

The UE may perform UE-based TA measurement to acquire a TA for a target cell. For example, UE operation 3-5 may be applied when the UE receives a cell switch command MAC CE and does not have a TA for the target cell at a timing when the RACH-less LTM is triggered. UE operation 3-5 may be preferably applied in option 1-1 of the first embodiment. As a matter of course, application of UE operation 3-5 is not limited to this.

### <<UE Operation 3-6>>

The UE may perform, by using an acquired TA value, the first UL (for example, PUSCH/PUCCH/SRS) transmission in an occasion configured by RRC (for example, a CG (Configure Grant) occasion).

The UL transmission may be performed after a given time (for example, X symbols/ms). A cell switch command MAC CE application time/beam application time/TAC application time may differ depending on a TA acquisition method.

When a TA is acquired by UE-based TA measurement, the application time (for example, a period of time from reception of a cell switch command MAC CE to the first UL transmission) may be shortened as compared to that in a case where the TA is acquired by another method. This is because the UE has already acquired an actual TA value (for example, TTA) used for the UL transmission. When another TA acquisition method is used, the UE is required to perform calculation by using a TA value (for example, NTA) indicated by the cell switch command MAC CE.

When a TA for a candidate cell is acquired by UE-based TA measurement before reception of a cell switch command MAC CE, RACH-less LTM is triggered, and the cell switch command MAC CE (for example, a TAC field) indicates a timing advance, the UE may control the first UL transmission by using the acquired TA. In other words, the UE may perform control so as not to apply (or to ignore) the timing advance indicated by the cell switch command MAC CE. With this, a period of time from the reception of the cell switch command MAC CE to the first UL transmission can be shortened.

Alternatively, the UE may perform control so as to apply the timing advance indicated by the cell switch command MAC CE (for example, so as not to apply/to ignore the TA acquired by the UE-based TA measurement).

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:
- supporting of specific processing/operation/control/information for at least one of the embodiments above

- supporting of UE-based TA measurement
- supporting of configuration of UE-based TA measurement and application of RACH-less LTM

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of a cell switch with a potential cell switch command, any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Notes)

Regarding one embodiment of the present disclosure, the following supplementary notes of the invention will be given.

### {Supplementary Note 1}

A terminal including: a receiving section that receives information indicating one or more candidate cells, information related to a timing advance acquisition method for the candidate cell, and cell switch command control information indicating a cell switch to a specific candidate cell; and a control section that judges, based on the information related to a timing advance acquisition method for the candidate cell, presence or absence of application of a timing advance procedure for the specific candidate cell after reception of the cell switch command control information.

### {Supplementary Note 2}

The terminal according to supplementary note 1, wherein when terminal-based timing advance measurement is configured for the specific candidate cell, the control section performs control to perform a cell switch without performing the random access procedure after the reception of the cell switch command control information.

### {Supplementary Note 3}

The terminal according to supplementary note 1 or 2, wherein when terminal-based timing advance measurement is configured for the specific candidate cell, and a given field included in the control information is a specific value, the control section performs control to perform a cell switch without performing the random access procedure after the reception of the cell switch command control information.

### {Supplementary Note 4}

The terminal according to any one of supplementary notes 1 to 3, wherein when terminal-based timing advance measurement is configured for the specific candidate cell, and the terminal has a timing advance for the specific candidate cell, the control section performs control to perform a cell switch without performing the random access procedure after the reception of the cell switch command control information.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

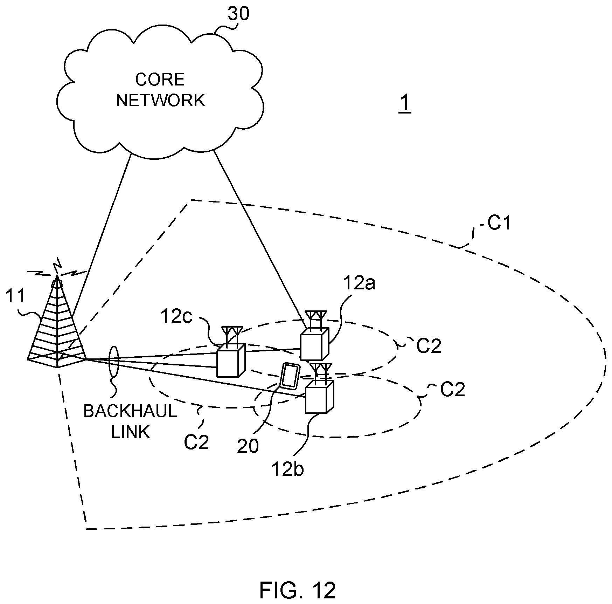

FIG. 12 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) or dual connectivity (DC) using a plurality of component carriers (CCs).

Each CC may be included in at least one of a first frequency band (Frequency Range 1 (FR1)) or a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) or frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), or the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) or the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH or the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), or scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) or a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

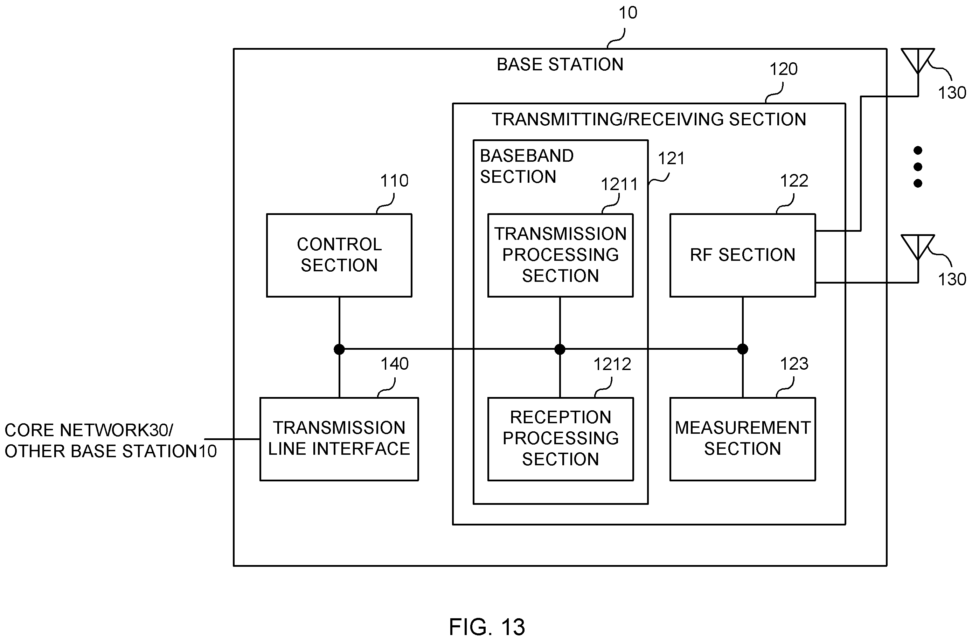

FIG. 13 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam or a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, or the communication path interface 140.

The transmitting/receiving section 120 may transmit information indicating one or more candidate cells, information related to a timing advance acquisition method for the candidate cell, and cell switch command control information indicating a cell switch to a specific candidate cell.

The control section 110 may indicate, based on the information related to a timing advance acquisition method for the candidate cell, presence or absence of application of a timing advance procedure for the specific candidate cell after reception of the cell switch command control information.

### (User Terminal)

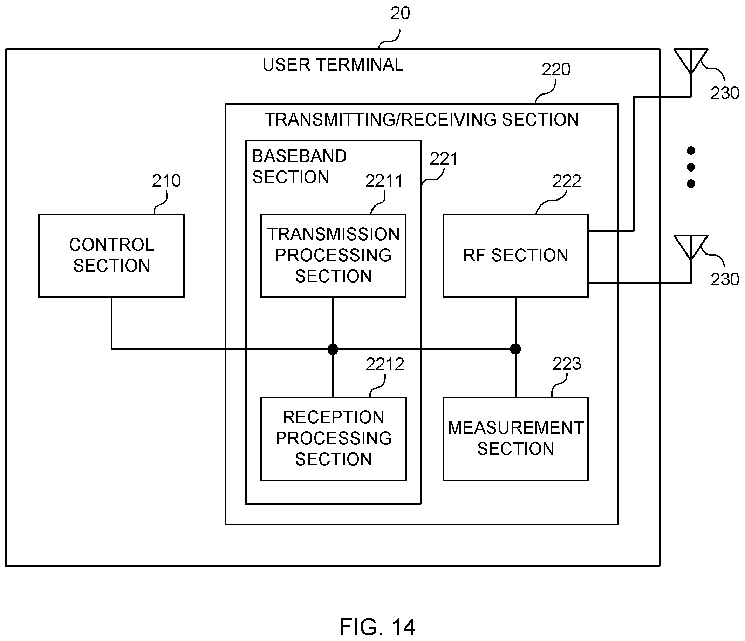

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam or a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, or the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 or the transmitting/receiving antennas 230.

The transmitting/receiving section 220 may receive information indicating one or more candidate cells, information related to a timing advance acquisition method for the candidate cell, and cell switch command control information indicating a cell switch to a specific candidate cell.

The control section 210 may judge, based on the information related to a timing advance acquisition method for the candidate cell, presence or absence of application of a timing advance procedure for the specific candidate cell after reception of the cell switch command control information.

When terminal-based timing advance measurement is configured for the specific candidate cell, the control section 210 may perform control to perform a cell switch without performing the random access procedure after the reception of the cell switch command control information.

When terminal-based timing advance measurement is configured for the specific candidate cell, and a given field included in the control information is a specific value, the control section may perform control to perform a cell switch without performing the random access procedure after the reception of the cell switch command control information.

When terminal-based timing advance measurement is configured for the specific candidate cell, and the terminal has a timing advance for the specific candidate cell, the control section may perform control to perform a cell switch without performing the random access procedure after the reception of the cell switch command control information.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

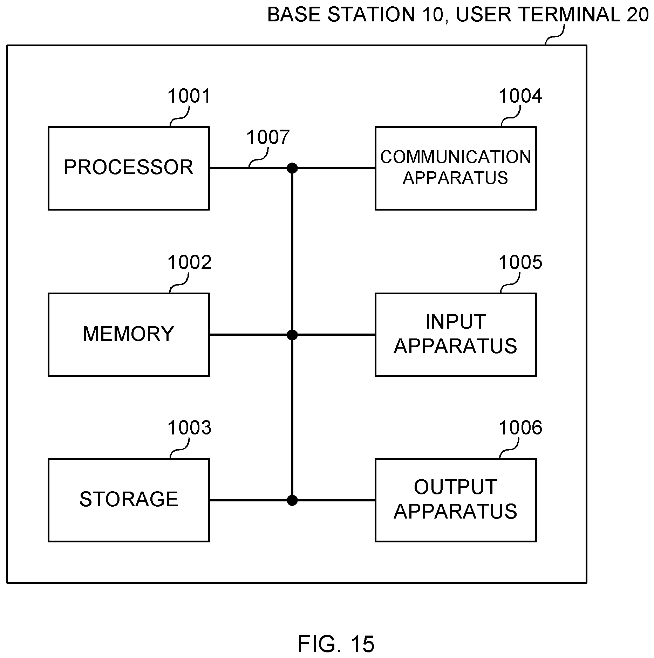

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

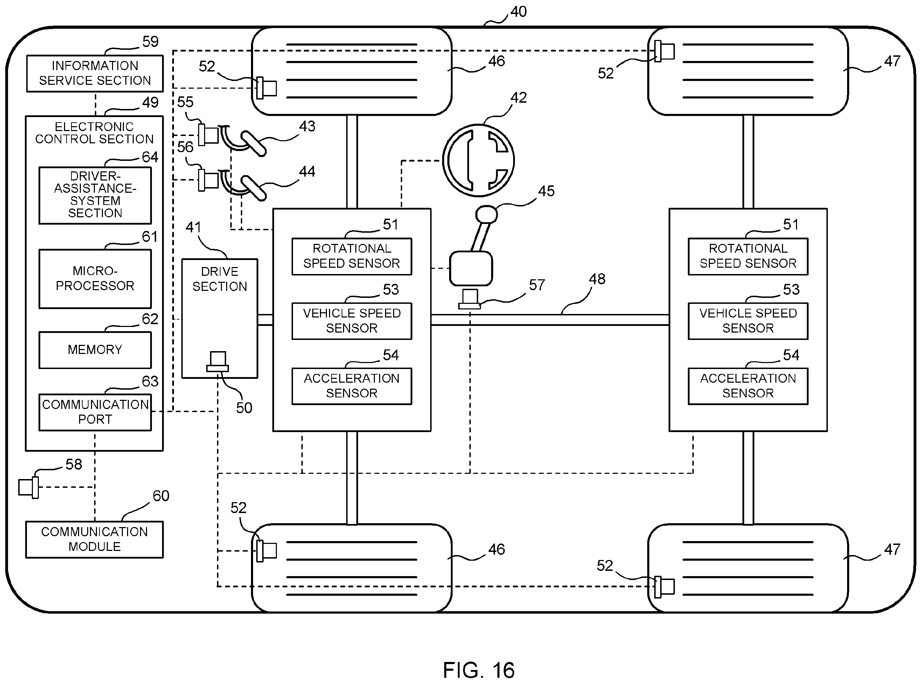

FIG. 16 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives information indicating one or more candidate cells, information related to a timing advance acquisition method for the candidate cell, and cell switch command control information indicating a cell switch to a specific candidate cell; and
a control section that judges, based on the information related to a timing advance acquisition method for the candidate cell, presence or absence of application of a timing advance procedure for the specific candidate cell after reception of the cell switch command control information.

2. The terminal according to claim 1, wherein
when terminal-based timing advance measurement is configured for the specific candidate cell, the control section performs control to perform a cell switch without performing the random access procedure after the reception of the cell switch command control information.

3. The terminal according to claim 1, wherein
when terminal-based timing advance measurement is configured for the specific candidate cell, and a given field included in the control information is a specific value, the control section performs control to perform a cell switch without performing the random access procedure after the reception of the cell switch command control information.

4. The terminal according to claim 1, wherein
when terminal-based timing advance measurement is configured for the specific candidate cell, and the terminal has a timing advance for the specific candidate cell, the control section performs control to perform a cell switch without performing the random access procedure after the reception of the cell switch command control information.

5. A radio communication method for a terminal, the radio communication method comprising:
receiving information indicating one or more candidate cells, information related to a timing advance acquisition method for the candidate cell, and cell switch command control information indicating a cell switch to a specific candidate cell; and
judging, based on the information related to a timing advance acquisition method for the candidate cell, presence or absence of application of a timing advance procedure for the specific candidate cell after reception of the cell switch command control information.

6. A base station comprising:
a transmitting section that transmits information indicating one or more candidate cells, information related to a timing advance acquisition method for the candidate cell, and cell switch command control information indicating a cell switch to a specific candidate cell; and
a control section that indicates, based on the information related to a timing advance acquisition method for the candidate cell, presence or absence of application of a timing advance procedure for the specific candidate cell after reception of the cell switch command control information.
